# EUROPEAN PATENT SPECIFICATION

(11) **EP 3 643 540 B1**
(45) Date of publication and mention of the grant of the patent: **07.05.2025**
(21) Application number: 19201768.9
(22) Date of filing: 07.10.2019
(51) Int. Cl.: B60C 19/08, B60C 9/00, D02G 3/48, D03D 15/00, D06M 11/83, B29D 30/38, D07B 1/06

(54) **TIRE CORD FABRIC, METHOD OF MANUFACTURING THE SAME, SHEET INCLUDING THE SAME, AND TIRE INCLUDING SUCH A SHEET**
REIFENKORDGEWEBE, VERFAHREN ZUR HERSTELLUNG DAVON, FOLIE DAMIT UND REIFEN MIT DER FOLIE
TISSU DE CORDE POUR PNEU, SON PROCÉDÉ DE FABRICATION, FEUILLE LE COMPRENANT ET PNEU COMPRENANT LA FEUILLE

(30) Priority: 26.10.2018 KR 20180128925
(43) Date of publication of application: 29.04.2020
(73) Proprietor: HANKOOK TIRE & TECHNOLOGY CO., LTD, Gangnam-gu Seoul 06133 (KR)
(72) Inventor: Lee, Jiwan, 34111 Daejeon (KR); Chung, Haekwang, 35351 Daejeon (KR); Ko, Kilju, 34094 Daejeon (KR); Lee, Mijung, 34111 Daejeon (KR); Cho, Hyunran, 34111 Daejeon (KR); Jo, Seokhee, 34127 Daejeon (KR); Park, Seungha, 34127 Daejeon (KR)
(74) Representative: Zimmermann, Tankred Klaus

(56) References cited:
- EP-A1- 2 193 939
- WO-A1-2016/204967
- DE-A1- 102011 001 593
- JP-A- 2013 161 138

## Description

### [Technical Field]

The present invention relates to a tire cord fabric, a method of manufacturing the same, a sheet including the same, and a tire including the sheet, and more specifically, to a tire cord fabric which can effectively discharge static electricity aggregated in a tire and can accomplish a fuel efficiency improving effect through low rolling resistance at the same time, a method of manufacturing the same, a sheet including the same, and a tire including the sheet.

### [Background Art]

Although there has not been a large problem in static electricity of a conventional carbon-based rubber composition, application of a high loading silica-containing rubber composition has been increasing according to an increase in fuel efficiency requiring performance. There is a problem that a rubber composition with a high silica content discharges static electricity to the surface of a road.

A method of discharging static electricity to the surface of the road from a tire having such a low rolling resistance (LRR) may include thinking of configuration of a sidewall rubber composition with a predetermined conductivity or more, an electrically conductive under tread rubber composition, a chimney, etc. However, an increase in the content of a carbon grade for conductivity of a sidewall is disadvantageous to LRR due to an increase in heating. Further, although it can be considered to develop an electrically conductive LRR sidewall rubber composition or an electrically conductive LRR carcass rubber composition, there actually is a limit to a certain extent in development of an LRR rubber composition with a tire resistance value of 1,000 V to 100 MΩ, i.e., a level required in an automobile manufacturer.

Further, LRR performance and electrical conductivity require much time and costs when developing a rubber composition which simultaneously satisfies LRR performance and electrical conductivity in a trade-off relationship. Particularly, since an existing sidewall rubber composition has a large influence degree of rolling resistance, it is usual to use a method of giving conductivity to a carcass rubber composition when a rubber composition with low rolling resistance properties is used in a state that conductivity of the sidewall is abandoned. However, in order to give conductivity to the carcass rubber composition, carbon black which increases conductivity and in which a structure, i.e., a direction of increasing strength and modulus of rubber is developed should be used. Such a method has a problem of difficult processability since the rubber composition is disadvantageous to heating during rolling processing, and the method has a disadvantage that processability gradually becomes disadvantageous when carbon with more developed structure is used to obtain desired conductivity. Therefore, there is a lot of technical difficulty in that both conductivity and low rolling resistance are compatible in an actual tire. WO 2016/204967, DE 10 2011 001593 and EP 2.193.939 disclose known prior art tire cord fabrics. JP2013-161138A relates to a cloth warming provided with an antenna for detecting a wireless ID tag such as an RFID and a movement detection device using the same. However, JP2013-161138A fails to disclose or suggest a conductive fiber that comes into contact with the surface of the tire cord and extends in a longitudinal direction of the tire cord, wherein the conductive fiber is a fiber having metal plated on the surface thereof.

### [Disclosure]

### [Technical Problem]

An objective of the present invention is to provide a tire cord fabric which can effectively discharge static electricity aggregated in a tire and can accomplish a fuel efficiency improving effect through low rolling resistance at the same time.

Other objective of the present invention is to provide a method of manufacturing a tire cord fabric, the method which does not require additional equipment by enabling an existing topping process applying method to be equally applied.

Another objective of the present invention is to provide a sheet including the tire cord fabric.

Another objective of the present invention is to provide a tire including the sheet.

### [Technical Solution]

Provided is a tire cord fabric according to an embodiment of the present invention, the tire cord fabric including a plurality of tire cords which are arranged in parallel to each other, a weft yarn which weaves the tire cords to conduct a weaving operation, and a conductive fiber which comes into contact with the surface of the tire cord and is extended in a longitudinal direction of the tire cord, wherein the conductive fiber is a fiber having metal plated on the surface thereof.

The conductive fiber may be fixed to the surface of the tire cord in a state that the conductive fiber is woven along with the tire cord by the weft yarn.

The tire cord fabric may include 2 to 30 conductive fibers.

The conductive fiber may be obtained by plating metal on the surface of any one fiber selected from the group consisting of a synthetic fiber, a cellulose fiber, and a mixed yarn thereof.

The synthetic fiber may be any one selected from the group consisting of polyester, polyimide, polyurethane, acrylic fiber, modacrylic fiber, and mixed yarns thereof.

The cellulose fiber may be any one selected from the group consisting of rayon, lyocell, tencel, and mixed yarns thereof.

The conductive fiber may be any one selected from the group consisting of a filament yarn, a staple fiber, and a spun yarn.

The spun yarn may have 10 yarn counts ('S) to 100 yarn counts ('S), and the filament yarn may have 10 deniers to 500 deniers.

Provided is a method of manufacturing a tire cord fabric according to another embodiment of the present invention is provided, the method comprising a step of manufacturing a conductive fiber by plating metal on the surface of a fiber, and a step of supplying a plurality of tire cords as a warp yarn and weaving a weft yarn with the tire cords to conduct a weaving operation, wherein the step of carrying out the weaving operation comprises mixing the conductive fiber with the tire cords to supply the conductive fiber as the warp yarn, and the conductive fiber is a fiber having metal plated on the surface thereof.

The step of manufacturing the conductive fiber may be performed by electroless plating copper sulfate on the surface of the fiber.

The step of carrying out the weaving operation may comprise warping or drawing the conductive fiber along with the tire cord.

The step of carrying out the weaving operation may comprise supplying the conductive fiber in the same heald, reed and dropper as the tire cord in the drawing process.

A sheet including the tire cord fabric and a topping rubber which tops the tire cord fabric according to another embodiment of the present invention is provided.

The topping rubber may comprise 100 parts by weight of raw rubber including 20 to 50 parts by weight of natural rubber and 50 to 80 parts by weight of emulsion-polymerized styrene butadiene rubber, and 20 to 60 parts by weight of carbon black having a statistical thickness surface area (STSA) value of 29 to 39 m²/g, an oil absorption number of compressed sample (COAN) value of 69 to 79 cc/100g, an oil absorption number of sample (OAN) value of 85 to 95 cc/100g, and an iodine adsorption amount value of 31 to 41 mg/g.

The topping rubber may comprise 100 parts by weight of raw rubber including 10 to 40 parts by weight of synthetic styrene butadiene rubber and 60 to 90 parts by weight of natural rubber, 10 to 40 parts by weight of a first carbon black having an STSA value of 29 to 39 m²/g, a COAN value of 69 to 79 cc/100g, an OAN value of 85 to 95 cc/100g, and an iodine adsorption amount value of 31 to 41 mg/g, and 20 to 50 parts by weight of a second carbon black having an STSA value of 70 to 80 m²/g, a COAN value of 83 to 93 cc/100g, an OAN value of 96 to 108 cc/100g, and an iodine adsorption amount value of 76 to 88 mg/g.

The sheet may be carcass.

A tire including the sheet according to another embodiment of the present invention is provided.

The tire may have a resistance value of 0.1 to 100 MΩ at a voltage of 1,000 V.

### [Advantageous Effects]

A tire cord fabric according to the present invention can effectively discharge static electricity aggregated in a tire by mixing a tire cord with a conductive fiber, thereby weaving a mixture of the tire cord and the conductive fiber. Particularly, the tire cord fabric according to the present invention can secure an effective conductive passage since the conductive fiber is extended in a radial direction from bead parts to a tread part as in a carcass cord.

Therefore, a tire cord fabric according to the present invention can simultaneously accomplish solving of a static electricity problem and obtaining of a fuel efficiency improving effect through low rolling resistance as a result by decreasing a demand associated with electrical conductivity of a rubber composition for sidewall and a rubber composition for topping, thereby enabling a rubber composition having a low loss modulus (E") for improving rolling resistance to be applied.

Further, a method of manufacturing a tire cord fabric does not require additional equipment by mixing the tire cord with the conductive fiber during manufacturing of an existing tire cord fabric, thereby enabling an existing topping process applying method to be equally applied.

### [Description of Drawings]

FIG. 1 is a perspective view schematically illustrating a tire cord fabric according to an embodiment of the present invention.
FIG. 2 is a cross-sectional view of FIG. 1.
FIG. 3 is a half-sectional view schematically illustrating a tire according to another embodiment of the present invention.

### [Mode for Invention]

Hereinafter, the embodiments of the present invention will be described in detail with reference to the accompanying drawings so that the present invention can be easily realized by those skilled in the art.

A tire cord fabric according to an embodiment of the present invention includes a plurality of tire cords which are arranged in parallel to each other, a weft yarn which weaves the tire cords to conduct a weaving operation, and a conductive fiber which comes into contact with the surface of the tire cord and is extended in a longitudinal direction of the tire cord.

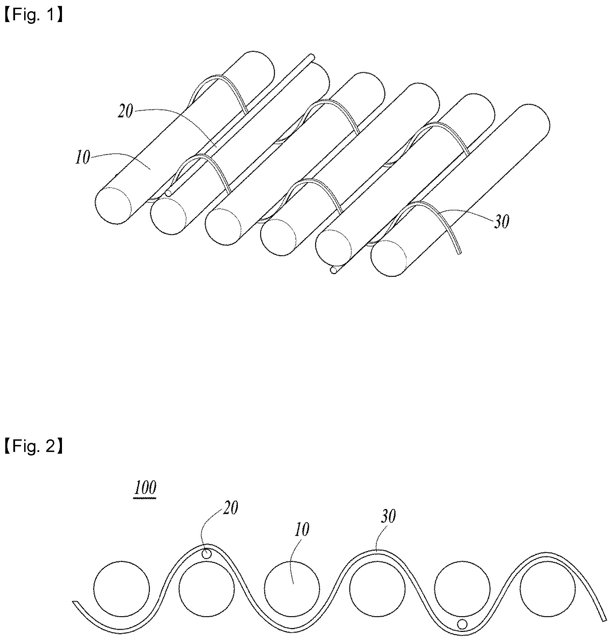

FIG. 1 is a perspective view schematically illustrating the tire cord fabric, and FIG. 2 is a cross-sectional view of FIG. 1. Hereinafter, the tire cord fabric 100 will be described with reference to FIG. 1 and FIG. 2.

Referring to FIG. 1 and FIG. 2, the tire cords 10 are arranged in parallel to each other. The tire cords 10 may be arranged to be separated from one another at predetermined intervals or may be arranged without intervals.

The tire cord 10 may include any cords for carcass generally used in tires, and may generally include a textile cord.

The tire cord 10 may have a diameter of 0.4 to 1.2 mm, specifically 0.5 to 1.0 mm. Strength force of the tire cord 10 may be excessively weak when the tire cord 10 has a diameter of less than 0.4 mm, while a cut surface of the tire cord 10 may become excessively thick when the tire cord 10 has a diameter of more than 1.2 mm.

The weft yarn 30 may enable the tire cord fabric 100 in the form of a fabric to be formed by weaving the tire cords 10 to conduct a weaving operation. For example, a method of weaving the tire cords 10 by the weft yarn 30 may comprise enabling the tire cords 10 to be woven by allowing the tire cords 10 to be vertically alternately crossed while disposing the weft yarn 30 in a width direction perpendicular to a longitudinal direction of the tire cords 10. Namely, the weft yarn 30 can pass under a next tire cord 10 when the weft yarn 30 passes over a first tire cord 10, a returning weft yarn 30 or a next weft yarn 30 passes under the tire cord 10 over which the first weft yarn 30 has passed, and the returning weft yarn 30 or the next weft yarn 30 passes over the tire cord 10 under which the first weft yarn 30 has passed such that the tire cord 10 can be woven. Further, the weft yarn 30 may pass under next two or more tire cords 10 after passing over two or more tire cords 10, or may pass under a next one tire cord 10 only after passing over two or more tire cords 10. As such, a method of weaving the tire cords 10 by the weft yarn 30 to conduct a weaving operation may be various.

The weft yarn 30 may include any yarns which weave the tire cords 10 so as to be able to conduct a weaving operation. For example, although the weft yarn 30 may include any one selected from the group consisting of a natural fiber, a synthetic fiber and a mixed yarn thereof, specifically a cotton spun yarn, a rayon spun yarn (polynosic spun yarn), a covering yarn in which cotton staple fibers or rayon staple fibers are covered on an undrawn yarn of nylon or polyester, etc.

The conductive fiber 20 comes into contact with the surface of the tire cord 10, and is extended in a longitudinal direction of the tire cord 10. Although a conductive fiber 20 may be come into contact with surfaces of several tire cords 10, a conductive fiber 20 may be come into contact with the surface of a tire cord 10 only, and may be extended along the contacted tire cord 10 only as illustrated in FIG. 1.

Further, as illustrated in FIG. 1 and FIG. 2, the conductive fiber 20 is woven along with the tire cord 10 by the weft yarn 30 such that the conductive fiber 20 may be fixed to the surface of the tire cord 10.

In this case, the conductive fiber 20 may be positioned on only one surface of the tire cord fabric 100, or may be alternately positioned on both surfaces of the tire cord fabric 100. Further, the conductive fiber 20 may be positioned between the tire cord 10 and the tire cord 10. In this case, the conductive fiber 20 may be woven by the weft yarn 30 separately from the tire cord 10. Namely, the weft yarn 30 may alternately cross over or under the tire cord 10 and the conductive fiber 20.

Further, the conductive fiber 20 has a sufficiently smaller diameter than that of the tire cord 10, the conductive fiber 20 is positioned in a valley formed between the tire cord 10 and the tire cord 10. Therefore, since the conductive fiber 20 is not protruded from the surface of the tire cord fabric 100, the surface of the tire cord fabric 100 is not uneven, and the tire cord fabric 100 may have a thickness corresponding to about a diameter of the tire cord 10.

Meanwhile, the conductive fiber 20 may have conductivity by plating metal on the surface of a fiber. Specifically, the conductive fiber 20 may be obtained by plating metal on the surface of any one fiber selected from the group consisting of a synthetic fiber, a cellulose fiber, and a mixed yarn thereof.

The synthetic fiber may be any one selected from the group consisting of polyester, polyamide, polyurethane, acrylic fiber, modacrylic fiber, and mixed yarns thereof. The cellulose fiber may be any one selected from the group consisting of rayon, lyocell, tencel, and mixed yarns thereof.

Further, the conductive fiber 20 may be any one selected from the group consisting of a filament yarn, a staple fiber, and a spun yarn. That is, the conductive fiber 20 may include a long fiber filament yarn used as it is, a texture-processed staple fiber used as a staple fiber, and a spun texture-processed staple fiber processed by a spun yarn.

The conductive fiber 20 may have a diameter of 0.05 mm to 0.5 mm considering easiness of manufacturing and durability and conductivity performance of a tire, the conductive fiber 20 may have 10 yarn counts ('S) to 100 yarn counts ('S) when the conductive fiber 20 is a spun yarn, and the conductive fiber 20 may have 10 deniers to 500 deniers when the conductive fiber 20 is a filament yarn. Here, the yarn count includes cotton count, wool count and flax count, a cotton yarn having weight of 1 pound (453 g) and length of 840 yards (768 m) is called as 1 yarn count in the cotton count, and a flax yarn having weight of 1 pound (453 g) and length of 300 yards (274 m) is called as 1 yarn count in the flax count. Further, a filament yarn having weight of 1 g based on length of 9,000 m is called as 1 denier in the denier. The conductive fiber 20 may be disadvantageous in workability since the conductive fiber 20 falls short of tensile strength when the conductive fiber 20 has a diameter of less than 0.05 mm, less than 10 yarn counts ('S) or less than 10 deniers, and the conductive fiber 20 may function as a foreign material within a tire since the conductive fiber 20 is too thick when the conductive fiber 20 has a diameter of more than 0.5 mm, more than 100 yarn counts ('S) or more than 500 deniers.

Although the more the conductive fiber 20 is, the better the conductive fiber 20 is considering static electricity performance, unit cost of the conductive fiber 20 is increased, and there is some room for the conductive fiber 20 to function as the foreign material within the tire since the conductive fiber 20 is expensive. Therefore, it can be seen that the intended goal of the conductive fiber 20 is accomplished when the tire can give a minimum electrical conductivity (resistance of less than 100 M Q). Accordingly, the conductive fibers 20 may be arranged at intervals of 20 to 400 mm, specifically 50 to 300 mm. Durability of the tire may deteriorate since the conductive fibers 20 is economically inefficient, and the conductive fibers 20 function as a foreign material within a tire when the conductive fibers 20 are arranged at intervals of less than 20 mm, while the conductive fibers 20 may not secure a desired level of electrical conductivity when the conductive fibers 20 are arranged at intervals of more than 400 mm.

In addition, the tire cord fabric 100 may include 2 to 30 conductive fibers 20. The tire cord fabric 100 cannot secure electrical conductivity since the tire cord fabric 100 includes one conductive fiber 20 only per one tire manufactured when the tire cord fabric 100 includes less than 2 conductive fibers 20, while there may be a problem in durability of the tire the tire cord fabric 100 is economically inefficient and includes an excessively large number of conductive fibers 20 when the tire cord fabric 100 includes more than 30 conductive fibers 20.

A method of manufacturing a tire cord fabric according to another embodiment of the present invention comprises the steps of plating metal on the surface of a fiber to manufacture a conductive fiber, and supplying a plurality of tire cords as a warp yarn and weaving a weft yarn with the tire cords to conduct a weaving operation.

First, a conductive fiber is manufactured by plating metal on the surface of a fiber.

The conductive fiber having metal plated on the surface thereof may be manufactured by electroplating or electroless plating the fiber taken out of the electrolyte after dipping any one fiber selected from the group consisting of the synthetic fiber, the cellulose fiber and a mixed yarn thereof in an electrolyte including a metal salt, or may be manufactured by plating metal on the surface of the fiber by a physical vapor deposition method or a chemical vapor deposition method.

Repetitive description is omitted since contents for any one fiber selected from the group consisting of the synthetic fiber, the cellulose fiber and the mixed yarn thereof, and the metal are the same as described above.

However, for example, a fiber having copper plated on the surface thereof may be manufactured by electroless plating the fiber taken out of the electrolyte after dipping any one fiber selected from the group consisting of the synthetic fiber, the cellulose fiber and the mixed yarn thereof in an electrolyte including a metal salt such as copper sulfate or the like.

The manufactured conductive fiber may be directly used as a long fiber in a weaving process, or may be used in the weaving process after optionally performing a texturing process by various methods as described above. When performing the texturing process on the conductive fiber having metal plated on the surface thereof, the textured conductive fiber may be helpful in electrical conductivity since a textured conductive fiber may have an increased bonding area with rubber due to its bulky characteristics. Further, when a spinning process is performed on the textured conductive fiber after performing the texturing process on the conductive fiber, the spinning process is progressed after manufacturing a sliver through carding and combing, wherein the spinning process can be smoothly performed by performing the texturing process, thereby giving a crimp to the conductive fiber since the filament long fiber cannot be spun although the spinning process is performed even after cutting a filament long fiber with strong straightness to a predetermined length.

A method of performing the texturing process may include all of a false-twist method, a stuffer-box method, an air-jet texturing method, or the like which has been generally known. The method of performing the texturing process may representatively include the false-twist method among them, and may suitably include the stuffer-box method in case of a thermoplastic fiber.

The staple fiber can be spun by various methods including ring spinning, air jet spinning, open end spinning, etc., after manufacturing a staple fiber by cutting the textured conductive fiber to a length of 1 to 5 cm.

Next, the tire cord fabric is manufactured by supplying a plurality of tire cords as a warp yarn and weaving a weft yarn with the tire cords to conduct a weaving operation.

In this case, a conductive fiber is mixed with the tire cords and supplied as the warp yarn. A method of manufacturing the tire cord fabric may be a method of manufacturing the existing tire cord fabric as it is except that the conductive fiber is mixed with the tire cords and supplied as the warp yarn during manufacturing of an existing tire cord fabric.

Specifically, the step of carrying out the weaving operation may comprise a winding process, a warping process, a drawing process, and a weaving process. More specifically, the winding process is a process of rewinding tire cords supplied in various forms, the warping process is a process of arranging the tire cords to be in parallel to one another to supply the tire cords (warp yarn) to a loom, and winding the tire cords around a warp beam in a state that tension of the tire cords is constantly maintained, the drawing process is a process of inserting the tire cords in the order of heald, reed and dropper according to design conditions of a fabric, and the weaving process is a process of inserting the weft yarn between the tire cords to manufacture the fabric into a desired tissue.

In this case, the conductive fiber as a warp yarn is mixed with the tire cord to enable the conductive fiber to be fixed to the surface of the tire cord in a state that the conductive fiber is woven along with the tire cord by the weft yarn. To this end, the conductive fiber along with the tire cord may be subjected to a warp process and/or a drawing process. Specifically, the warping process may comprise carrying out a creeling operation of the conductive fiber along with the tire cord, and the drawing process may comprise supplying the conductive fiber to heald, reed and dropper which are the same as the tire cord, thereby enabling the conductive fiber to be woven along with the tire cord by the weft yarn.

The conductive fiber may be injected through a drawing line which is the same as the tire cord at a weaving width of 1,450 to 1,700 cm and intervals of 5 to 70 cm based on the reed. The creeling operation may be progressed in a state that the conductive fiber and the tire cord are put over the same creel shaft, or may comprise carrying out a weaving operation to manufacture a tire cord Griege fabric by passing heald and reed having the same column after sticking the conductive fiber and the tire cord into a separate creel shaft.

Thereafter, the method may comprise passing the manufactured tire cord Griege fabric through a heat treatment process to set final properties of the tire cord Griege fabric, and proceeding a dip solution coating process to manufacture the tire cord Griege fabric into a heat-treated fabric (dipped fabric).

A sheet according to another embodiment of the present invention includes the tire cord fabric, and a topping rubber which tops the tire cord fabric.

The topping rubber enables the sheet to be formed by penetrating between the tire cord fabrics while surrounding one surface or both surfaces of the tire cord fabric.

For example, although the sheet may include any sheet including a tire cord fabric topped with the topping rubber, e.g., carcass.

According as the sheet effectively discharges static electricity aggregated in a tire to a road surface, a tire including the sheet may have a resistance value of 0.1 to 100 MΩ at a voltage of 1,000 V. In order for the tire to have a resistance value of less than 0.1 MΩ at the voltage of 1,000 V, there are many other tradeoff items, e.g., additional application of a conducting compound or excessive use of the conductive fiber may be disadvantageous to rolling resistance, while static electricity of a tire may not be discharged when the tire has a resistance value of more than 100 M Ω .

The sheet may effectively discharge static electricity aggregated in the tire. Particularly, an effective conductive passage can be secured by radially extending the conductive fiber like a carcass cord from bead parts to a tread part.

Through this, according as electrical conductivity is being given to a part except for the production of a rubber composition, degree of freedom for developing LRR of a carcass topping rubber composition and a sidewall rubber composition may be increased. Namely, since demand for electrical conductivity of the sidewall rubber composition and the carcass topping rubber composition is decreased, a rubber composition for improving rolling resistance may be applied. Accordingly, a fuel efficiency improved tire for solving a static electricity problem and having LRR may be manufactured by applying the conductive fiber.

Therefore, although any topping rubber as the topping rubber is applicable if it is a textile cord topping rubber generally used in a tire, the topping rubber may have a composition with excellent LRR characteristics comprising 20 to 60 parts by weight of carbon black which has a large particle size and of which structure is not much developed with respect to 100 parts by weight of raw rubber including 20 to 50 parts by weight of natural rubber and 50 to 80 parts by weight of emulsion-polymerized styrene butadiene rubber. When the topping rubber is produced as described above, the topping rubber is advantageous to bonding in that styrene butadiene rubber is included in the topping rubber, the topping rubber is advantageous to rolling resistance by reducing internal heating according to use of the carbon black of which structure is not developed, and the topping rubber is desirable in that heating is decreased by reducing parts by weight of carbon black also. The tire may have a resistance value of 0.1 to 100 M Ω at a voltage of 1,000 V by including the sheet. The carbon black which has a large particle size and of which structure is not much developed may be carbon black having a statistical thickness surface area (STSA) value of 29 to 39 m²/g, an oil absorption number of compressed sample (COAN) value of 69 to 79 cc/100g, an oil absorption number of sample (OAN) value of 85 to 95 cc/100g, and an iodine adsorption amount value of 31 to 41 mg/g.

Nevertheless, the topping rubber may also be a conducting topping rubber composition for further improving electrical conductivity of the sheet. The conducting topping rubber composition may have a composition comprising 10 to 40 parts by weight of a first carbon black which has a relatively large particle size and of which structure is relatively less developed and 20 to 50 parts by weight of a second carbon black which has a relatively small particle size and of which structure is relatively well developed with respect to 100 parts by weight of raw rubber including 10 to 40 parts by weight of synthetic styrene butadiene rubber and 60 to 90 parts by weight of natural rubber. The first carbon black which has a relatively large particle size and of which structure is relatively less developed may be carbon black having an STSA value of 29 to 39 m²/g, a COAN value of 69 to 79 cc/100g, an OAN value of 85 to 95 cc/100g, and an iodine adsorption amount value of 31 to 41 mg/g. The second carbon black which has a relatively small particle size and of which structure is relatively well developed may be carbon black having an STSA value of 70 to 80 m²/g, a COAN value of 83 to 93 cc/100g, an OAN value of 96 to 108 cc/100g, and an iodine adsorption amount value of 76 to 88 mg/g.

Further, the sidewall rubber may be applicable to a rubber composition having low conductivity and low rolling resistance characteristics. The sidewall rubber may have a composition comprising 20 to 70 parts by weight of carbon black which has a large particle size and of which structure is not much developed with respect to 100 parts by weight of raw rubber including 30 to 70 parts by weight of natural rubber and 30 to 70 parts by weight of synthetic butadiene rubber. The sidewall rubber is desirable in that it has excellent fuel efficiency since heating is reduced when the sidewall rubber is produced in such a composition. Even when the sidewall rubber having such a composition is contained in the tire, the tire may have a resistance value of 0.1 to 100 M Ω at a voltage of 1,000 V by including the sheet. The carbon black which has a large particle size and of which structure is not much developed may be carbon black having an STSA value of 29 to 39 m²/g, a COAN value of 69 to 79 cc/100g, an OAN value of 85 to 95 cc/100g, and an iodine adsorption amount value of 31 to 41 mg/g.

Meanwhile, the sidewall rubber may also be a conducting sidewall rubber composition for further improving electrical conductivity of the tire. The conducting sidewall rubber composition may have a composition comprising 10 to 40 parts by weight of a first carbon black which has a relatively large particle size and of which structure is relatively less developed and 10 to 30 parts by weight of a third carbon black which has a relatively small particle size and of which structure is relatively very well developed with respect to 100 parts by weight of raw rubber including 30 to 70 parts by weight of natural rubber and 30 to 70 parts by weight of synthetic butadiene rubber. The first carbon black which has a relatively large particle size and of which structure is relatively less developed may be carbon black having an STSA value of 29 to 39 m²/g, a COAN value of 69 to 79 cc/100g, an OAN value of 85 to 95 cc/100g, and an iodine adsorption amount value of 31 to 41 mg/g. The third carbon black which has a relatively small particle size and of which structure is relatively very well developed may be carbon black having an STSA value of 118 to 129 m²/g, a COAN value of 91 to 101 cc/100g, an OAN value of 108 to 118 cc/100g, and an iodine adsorption amount value of 150 to 165 mg/g.

The sheet may be manufactured by rolling and cutting a topping rubber-topped tire cord fabric obtained by topping the tire cord fabric with the topping rubber. In this case, the sheet is manufactured through a heat treater when the tire cord fabric is the Griege fabric, and manufactured through a general rolling process when the tire cord fabric is a heat-treated fabric (dipped fabric). Namely, since an existing topping process applying method may be equally applied to the tire cord fabric, the tire cord fabric does not require additional facilities.

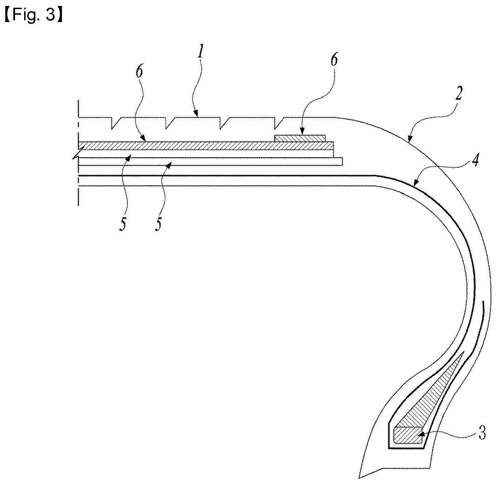

A tire according to another embodiment of the present invention includes the sheet. FIG. 3 is a half-sectional view schematically illustrating the tire. Hereinafter, the tire will be described with reference to FIG. 3.

The tire includes a tread part 1, a sidewall part 2, and a pair of left and right bead parts 3. The pair of left and right bead parts 3 have a carcass layer 4 installed therebetween, and tire width directional both end portions of the carcass layer 4 are each wound up the circumference of the bead parts 3 from an inner side of the tire to an outer side thereof. The carcass layer 4 has a belt layer 5 and a reinforcing belt layer 4 installed on an outer side thereof, and the carcass layer 4 has an inner liner (not illustrated) disposed on an inner side thereof.

In this case, the sheet according to the present invention may be applied to the carcass layer 4. Therefore, static electricity aggregated in the tire may be effectively discharged, and particularly since the tire cord fabric is radially extended from the bead parts to the tread part as in the carcass layer 4, an effective conductive passage can be secured.

On the other hand, although the tire may be preferably a general passenger car tire. The tire may be a passenger car tire, a light truck tire, a high-performance tire, an SUV tire, an off-the-road tire, a bias truck tire, a bias bus tire, etc. Further, the tire may be a radial tire or a bias tire.

### (Examples 1 to 8 and Comparative Examples 1 to 2)

As represented in the following Table 1 and Table 2, after selecting a tire 225/45R17 standard, carcasses were manufactured by weaving copper-plated conductive fibers in Examples 1 to 8 without using a conductive fiber in Comparative Examples 1 and 2.

Specifically, tire cord fabrics according to embodiments of the present invention were manufactured as follows.

After dipping acryl long fibers or N66 long fibers in a copper sulfate electrolyte, copper-plated conductive fibers were manufactured by electroless plating the acryl long fibers or N66 long fibers dipped in the copper sulfate electrolyte. The conductive fibers as filament long fibers had a fineness of 200 deniers.

When weaving tire cord fabrics using the manufactured conductive fibers, the conductive fibers as a warp yarn were mixed along with tire cords. Specifically, the conductive fibers were injected through the same drawing line as the tire cords at intervals of 10 cm, 20 cm and 30 cm respectively at a weaving width of 165 cm based on the reed. In this case, the heald and reed having the same column as the tire cords were passed after sticking the conductive fibers and the tire cords into a separate creel shaft. In this case, a PET 1500 D/2 with a diameter of 0.68 mm was used as a carcass cord, and a nylon-cotton covering yarn with a diameter of 250 deniers was used as a weft yarn.

After primarily dipping the woven Griege fabric in epoxy, drying a woven Griege fabric dipped in epoxy at 145 °C and appropriate tension for 5 minutes, secondly dipping a dried-primarily dipped woven Griege fabric in a resinol-formaldehyde latex (RFL) aqueous solution, and drying a secondly dipped woven Griege fabric at 145 °C for 5 minutes, a dried-secondly dipped woven Griege fabric was heat-treated in a continuous process at 245 °C and appropriate tension for 5 minutes to manufacture a dipped fabric cord. A rolling process was performed on the manufactured dipped fabric cord using a topping rubber composition by a 4 bowl calender. A rolling-completed rolled sheet was cut to 90 degrees of an angle in accordance with a tire size.

**Table 1**

| Classification | Comparative Example 1 | Example 1 | Example 2 | Example 3 |
|---|---|---|---|---|
| Standard | 225/45R17 | 225/45R17 | 225/45R17 | 225/45R17 |
| Application region | None | Warp yarn at intervals of 10 cm | Warp yarn at intervals of 20 cm | Warp yarn at intervals of 30 cm |
| Conductive fiber | None | Copper-plated acryl long fiber -12 strands applied to a tire | Copper-plated acryl long fiber -6 strands applied to a tire | Copper-plated acryl long fiber -4 strands applied to a tire |
| Carcass topping rubber composition¹⁾ | General rubber composition (nonconducting) | General rubber composition (nonconducting) | General rubber composition (nonconducting) | General rubber composition (nonconducting) |
| Sidewall rubber composition²⁾ | General rubber composition (conducting) | General rubber composition (nonconducting) | General rubber composition (nonconducting) | General rubber composition (nonconducting) |

| | | | | |
|---|---|---|---|---|
| 1) Carcass topping rubber composition: a nonconducting general rubber composition comprising 70 parts by weight of carbon black with a characteristic which has a large particle size and of which structure is not developed with respect to 100 parts by weight of raw rubber including 30 parts by weight of synthetic styrene butadiene rubber and 70 parts by weight of natural rubber. The carbon black which has a large particle size and of which structure is not developed is carbon black having an STSA value of 34 m²/g, a COAN value of 74 cc/100g, an OAN value of 90 cc/100g, and an iodine adsorption amount value of 36 mg/g. 2) Sidewall rubber composition: a nonconducting general rubber composition comprising 70 parts by weight of carbon black with a characteristic which has a large particle size and of which structure is not developed with respect to 100 parts by weight of raw rubber including 70 parts by weight of natural rubber and 30 parts by weight of synthetic butadiene rubber. The carbon black which has a large particle size and of which structure is not developed is carbon black having an STSA value of 34 m²/g, a COAN value of 74 cc/100g, an OAN value of 90 cc/100g, and an iodine adsorption amount value of 36 mg/g. - Sidewall rubber composition (conducting rubber composition): a rubber composition with excellent conductivity comprising 30 parts by weight of a first carbon black which has a relatively large particle size and of which structure is relatively less developed and 20 parts by weight of a third carbon black which has a relatively small particle size and of which structure is relatively very well developed with respect to 100 parts by weight of raw rubber including 70 parts by weight of natural rubber and 30 parts by weight of synthetic butadiene rubber. The first carbon black which has a relatively large particle size and of which structure is relatively less developed is carbon black having an STSA value of 34 m²/g, a COAN value of 74 cc/100g, an OAN value of 90 cc/100g, and an iodine adsorption amount value of 36 mg/g. The third carbon black which has a relatively small particle size and of which structure is relatively very well developed is carbon black having an STSA value of 123 m²/g, a COAN value of 96 cc/100g, an OAN value of 113 cc/100g, and an iodine adsorption amount value of 160 mg/g. | | | | |

**[Table 2]**

| Classification | Comparative Example 2 | Example 4 | Example 5 | Example 6 |
|---|---|---|---|---|
| Standard | 225/45R17 | 225/45R17 | 225/45R17 | 225/45R17 |
| Application region | None | Warp yarn at intervals of 10 cm | Warp yarn at intervals of 20 cm | Warp yarn at intervals of 30 cm |
| Conductive fiber | None | Copper-plated acryl long fiber -12 strands applied to a tire | Copper-plated acryl long fiber -6 strands applied to a tire | Copper-plated acryl long fiber -4 strands applied to a tire |
| Carcass topping | LRR rubber | LRR rubber | LRR rubber | LRR rubber |
| rubber composition¹⁾ | composition (nonconducting) | composition (nonconducting) | composition (nonconducting) | composition (nonconducting) |
| Sidewall rubber composition²⁾ | LRR rubber composition (nonconducting) | LRR rubber composition (nonconducting) | LRR rubber composition (nonconducting) | LRR rubber composition (nonconducting) |

| | | | | |
|---|---|---|---|---|
| 1) Carcass topping rubber composition (LRR rubber composition): an LRR rubber composition comprising 30 parts by weight of carbon black with a characteristic which has a large particle size and of which structure is not much developed with respect to 100 parts by weight of raw rubber including 70 parts by weight of emulsion-polymerized styrene butadiene rubber and 30 parts by weight of natural rubber. The carbon black which has a large particle size and of which structure is not much developed is carbon black having an STSA value of 34 m²/g, a COAN value of 74 cc/100g, an OAN value of 90 cc/100g, and an iodine adsorption amount value of 36 mg/g. 2) Sidewall rubber composition (LRR rubber composition): an LRR rubber composition comprising 50 parts by weight of a carbon black filler which has a large particle size and of which structure is not much developed with respect to 100 parts by weight of raw rubber including 50 parts by weight of natural rubber and 50 parts by weight of synthetic butadiene rubber. The carbon black which has a large particle size and of which structure is not much developed is carbon black having an STSA value of 34 m²/g, a COAN value of 74 cc/100g, an OAN value of 90 cc/100g, and an iodine adsorption amount value of 36 mg/g. | | | | |

### [Experimental Example 1]

After measuring conduction performance and durability performance of tires manufactured in the foregoing Examples and Comparative Examples, measurement results are represented in the following Table 3 and Table 4.

**[Table 3]**

| Classification | Comparative Example 1 | Example 1 | Example 2 | Example 3 |
|---|---|---|---|---|
| Electric resistance (measured on a tire) | 20 MΩ | 1.0 MQ | 2 MΩ | 2.5 MΩ |
| High speed durability | 100 min (OK) | 100 min (OK) | 100 min (OK) | 100 min (OK) |
| General durability | 60 hr (OK) | 60 hr (OK) | 60 hr (OK) | 60 hr (OK) |
| Long-term durability | 400 hr (OK) | 400 hr (OK) | 400 hr (OK) | 400 hr (OK) |
| RRc (Index) | 100 | 100 | 100 | 100 |

**[Table 4]**

| Classification | Comparative Example 2 | Example 4 | Example 5 | Example 6 |
|---|---|---|---|---|
| Electric resistance (measured on a tire) | 29.9 MΩ | 5 MΩ | 10 MΩ | **11** MΩ |
| High speed durability | 100 min (OK) | 100 min (OK) | 100 min (OK) | 100 min (OK) |
| General durability | 60 hr (OK) | 60 hr (OK) | 60 hr (OK) | 60 hr (OK) |
| Long-term durability | 400 hr (OK) | 400 hr (OK) | 400 hr (OK) | 400 hr (OK) |
| RRc (Index) | 96 | 96 | 97 | 95 |

In Table 3 and Table 4, the electric resistance was measured by applying a voltage of 1,000 V to a grounding part and a rim part of a tire, and the highspeed durability, general durability and long-term durability were measured at conditions of 140% and 80 km/hr compared to load index. The rolling resistance (RRc) was measured by an ISO 20580 method, a rolling resistance value of Comparative Example 1 was indexed as 100, and the lower the rolling resistance value is, the more excellent the rolling resistance value is.

Referring to Table 3 and Table 4, it can be confirmed that there are no variations in durability and rolling resistance through durability performance and rolling resistance tests although conductivity performance is improved in Examples 1 to 3 since electric resistance is lowered in Examples 1 to 3 compared to Comparative Example 1.

On the other hand, a difference in conductivity performance can be confirmed when there are not conductive fibers according to types of a carcass topping rubber composition and a sidewall topping rubber composition in Comparative Example 1 and Comparative Example 2. In this case, it can be confirmed that conductivity performance is improved in Examples 3 to 6 by applying the tire cord fabric, thereby lowering electric resistance even when an LRR rubber composition is used in a carcass rubber composition and a sidewall rubber composition. Further, it can be confirmed that Examples 3 to 6 simultaneously accomplish effects of solving a static electricity problem through application of the LRR rubber composition and improving fuel efficiency through low rolling resistance.

### [Explanation of marks]

1. Tread part
2. Sidewall part
3. Bead parts
4. Carcass layer
5. Belt layer
6. Reinforcing belt layer
10. Tire cord
20. Conductive fiber
30. Weft yarn
100. Tire cord fabric

## Claims

1. A tire cord fabric including:
a plurality of tire cords (10) which are arranged in parallel to each other;
a weft yarn (30) which weaves the tire cords (10) to conduct a weaving operation; and
a conductive fiber (20)
**characterized in that** said conductive fiber (20) comes into contact with the surface of the tire cord (10) and extends in a longitudinal direction of the tire cord (10), wherein the conductive fiber (20) is a fiber having metal plated on the surface thereof.

2. The tire cord fabric of claim 1, wherein the conductive fiber (20) is fixed to the surface of the tire cord in a state that the conductive fiber is woven along with the tire cord (10) by the weft yarn (30).

3. The tire cord fabric of claim 1, wherein the tire cord fabric includes 2 to 30 conductive fibers (20).

4. The tire cord fabric of claim 1, wherein the conductive fiber (20) is obtained by plating metal on the surface of any one fiber selected from the group consisting of a synthetic fiber, a cellulose fiber, and a mixed yarn thereof.

5. The tire cord fabric of claim 4, wherein the synthetic fiber is any one selected from the group consisting of polyester, polyimide, polyurethane, acrylic fiber, modacrylic fiber, and mixed yarns thereof.

6. The tire cord fabric of claim 4, wherein the cellulose fiber is any one selected from the group consisting of rayon, lyocell, tencel, and mixed yarns thereof.

7. The tire cord fabric of claim 4, wherein the conductive fiber (20) is any one selected from the group consisting of a filament yarn, a staple fiber, and a spun yarn.

8. The tire cord fabric of claim 7, wherein the spun yarn has 10 yarn counts ('S) to 100 yarn counts ('S), and the filament yarn has 10 deniers to 500 deniers.

9. A method of manufacturing a tire cord fabric, the method comprising a step of manufacturing a conductive fiber (20) by plating metal on the surface of a fiber and a step of supplying a plurality of tire cords (10) as a warp yarn and weaving a weft yarn (30) with the tire cords (10) to conduct a weaving operation, **characterized in that** the step of carrying out the weaving operation comprises making the conductive fiber (20) to come into contact with surfaces of the tire cords (10) and extend in a longitudinal direction of the tire cords (10), with the tire cords (10) to supply the conductive fiber (20) as the warp yarn, and the conductive fiber (20) is a fiber having metal plated on the surface thereof.

10. The method of claim 9, wherein the step of manufacturing the conductive fiber (20) is performed by electroless plating copper sulfate on the surface of the fiber.

11. The method of claim 9, wherein the step of carrying out the weaving operation comprises warping or drawing the conductive fiber (20) along with the tire cord (10).

12. The method of claim 9, wherein the step of carrying out the weaving operation comprises supplying the conductive fiber (20) in the same heald, reed and dropper as the tire cord (10) in the drawing process.

13. A sheet including the tire cord fabric according to any one of claims 1 to 8 and a topping rubber which tops the tire cord fabric.

14. The sheet of claim 13, wherein the topping rubber comprises 100 parts by weight of raw rubber including 20 to 50 parts by weight of natural rubber and 50 to 80 parts by weight of emulsion-polymerized styrene butadiene rubber, and 20 to 60 parts by weight of carbon black having a statistical thickness surface area (STSA) value of 29 to 39 m²/g, an oil absorption number of compressed sample (COAN) value of 69 to 79 cc/100g, an oil absorption number of sample (OAN) value of 85 to 95 cc/100g, and an iodine adsorption amount value of 31 to 41 mg/g.

15. The sheet of claim 13, wherein the topping rubber comprises 100 parts by weight of raw rubber including 10 to 40 parts by weight of synthetic styrene butadiene rubber and 60 to 90 parts by weight of natural rubber, 10 to 40 parts by weight of a first carbon black having an STSA value of 29 to 39 m²/g, a COAN value of 69 to 79 cc/100g, an OAN value of 85 to 95 cc/100g, and an iodine adsorption amount value of 31 to 41 mg/g, and 20 to 50 parts by weight of a second carbon black having an STSA value of 70 to 80 m²/g, a COAN value of 83 to 93 cc/100g, an OAN value of 96 to 108 cc/100g, and an iodine adsorption amount value of 76 to 88 mg/g.

16. The sheet of claim 13, wherein the sheet is carcass.

17. A tire including the sheet according to claim 13.

18. The tire of claim 17, wherein a grounding part and rim part of the tire has a resistance value of 0.1 to 100 MΩ at a voltage of 1,000 V.

## Patentansprüche

1. Reifencordgewebe, das folgende Merkmale aufweist:
eine Mehrzahl von Reifencords (10), die parallel zueinander angeordnet sind;
ein Schussgarn (30), das die Reifencords (10) verwebt, um einen Webvorgang auszuführen; und
eine leitfähige Faser (20),
**dadurch gekennzeichnet, dass** die leitfähige Faser (20) mit der Oberfläche des Reifencords (10) in Kontakt tritt und sich in einer Längsrichtung des Reifencords (10) erstreckt, wobei die leitfähige Faser (20) eine Faser mit auf die Oberfläche derselben plattiertem Metall ist.

2. Reifencordgewebe gemäß Anspruch 1, bei dem die leitfähige Faser (20) in einem Zustand an der Oberfläche des Reifencords fixiert ist, dass die leitfähige Faser zusammen mit dem Reifencord (10) durch das Schussgarn (30) verwebt ist.

3. Reifencordgewebe gemäß Anspruch 1, wobei das Reifencordgewebe 2 bis 30 leitfähige Fasern (20) aufweist.

4. Reifencordgewebe gemäß Anspruch 1, bei dem die leitfähige Faser (20) erhalten wird durch Plattieren von Metall auf die Oberfläche einer Faser, die aus der Gruppe ausgewählt ist, die eine Kunstfaser, eine Zellulosefaser und ein Mischgarn derselben aufweist.

5. Reifencordgewebe gemäß Anspruch 4, bei dem die Kunstfaser eine ist, die aus der Gruppe ausgewählt ist, die Polyester, Polyimid, Polyurethan, Acrylfaser, Modacrylfaser und Mischgarne derselben aufweist.

6. Reifencordgewebe gemäß Anspruch 4, bei dem die Zellulosefaser eine ist, die aus der Gruppe ausgewählt ist, die Rayon, Lyocell, Tencel und Mischgarne derselben aufweist.

7. Reifencordgewebe gemäß Anspruch 4, bei dem die leitfähige Faser (20) eine ist, die aus der Gruppe ausgewählt ist, die ein Filamentgarn, eine Stapelfaser und ein gesponnenes Garn aufweist.

8. Reifencordgewebe gemäß Anspruch 7, bei dem das gesponnene Garn Garnnummer ('S) 10 bis Garnnummer ('S) 100 aufweist und das Filamentgarn 10 Denier bis 500 Denier aufweist.

9. Verfahren zur Herstellung eines Reifencordgewebes, wobei das Verfahren einen Schritt eines Herstellens einer leitfähigen Faser (20) durch Plattieren von Metall auf die Oberfläche einer Faser und einen Schritt eines Zuführens einer Mehrzahl von Reifencords (10) als Kettgarn und Verwebens eines Schussgarns (30) mit den Reifencords (10) aufweist, um einen Webvorgang auszuführen, **dadurch gekennzeichnet, dass** der Schritt des Ausführens des Webvorgangs ein Bewirken, dass die leitfähige Faser (20) mit Oberflächen der Reifencords (10) in Kontakt tritt und sich in einer Längsrichtung der Reifencords (10) erstreckt, aufweist, wobei die Reifencords (10) die leitfähige Faser (20) als Kettgarn zuführen und die leitfähige Faser eine Faser mit auf die Oberfläche derselben plattiertem Metall ist.

10. Verfahren gemäß Anspruch 9, bei dem der Schritt des Herstellens der leitfähigen Faser (20) durchgeführt wird durch stromloses Plattieren von Kupfersulfat auf die Oberfläche der Faser.

11. Verfahren gemäß Anspruch 9, bei dem der Schritt des Ausführens des Webvorgangs ein Verziehen oder Ziehen der leitfähigen Faser (20) zusammen mit dem Reifencord (10) aufweist.

12. Verfahren gemäß Anspruch 9, bei dem der Schritt des Ausführens des Webvorgangs ein Zuführen der leitfähigen Faser (20) in der gleichen Litze, Blatt, Lamelle wie der Reifencord (10) bei dem Ziehvorgang aufweist.

13. Bogen mit dem Reifencordgewebe gemäß einem der Ansprüche 1 bis 8 und einem Belaggummi, der das Reifencordgewebe bedeckt.

14. Bogen gemäß Anspruch 13, bei dem der Belaggummi 100 Gewichtsteile Rohgummi mit 20 bis 50 Gewichtsteilen Naturkautschuk und 50 bis 80 Gewichtsteilen emulsionspolymerisiertem Styrolbutadien-Kautschuk aufweist, und 20 bis 60 Gewichtsteile Carbon Black mit einem Wert einer statistischen Dickenoberflächenfläche (STSA-Wert) von 29 bis 39 m²/g, einem Wert einer Ölabsorptionszahl einer komprimierten Probe (COAN-Wert) von 69 bis 79 cc/100g, einem Wert einer Ölabsorptionszahl einer Probe (OAN-Wert) von 85 bis 95cc/100g und einem lod-Adsorptionsmengenwert von 31 bis 41 mg/g.

15. Bogen gemäß Anspruch 13, bei dem der Belaggummi 100 Gewichtsteile Rohgummi mit 10 bis 40 Gewichtsteilen synthetischem Styrolbutadien-Kautschuk und 60 bis 90 Gewichtsteilen Naturkautschuk, 10 bis 40 Gewichtsteile eines ersten Carbon Black mit einem STSA-Wert von 29 bis 39 m²/g, einem COAN-Wert von 69 bis 79 cc/100g, einem OAN-Wert von 85 bis 95 cc/100g und einem lod-Adsorptionsmengenwert von 31 bis 41 mg/g, und 20 bis 50 Gewichtsteile eines zweiten Carbon Black mit einem STSA-Wert von 70 bis 80 m²/g, einem COAN-Wert von 83 bis 93 cc/100g, einem OAN-Wert von 96 bis 108 cc/100g und einem lod-Adsorptionsmengenwert von 76 bis 88 mg/g aufweist.

16. Bogen gemäß Anspruch 13, wobei der Bogen eine Karkasse ist.

17. Reifen mit dem Bogen gemäß Anspruch 13.

18. Reifen gemäß Anspruch 17, bei dem ein Erdungsteil und ein Randteil des Reifens einen Widerstandswert von 0,1 bis 100 MΩ bei einer Spannung von 1000 V aufweisen.

## Revendications

1. Tissu de câble pour pneu incluant :
une pluralité de câbles (10) pour pneu qui sont agencés parallèlement les uns aux autres ;
un fil de trame (30) qui tisse les câbles (10) pour pneu afin de mener une opération de tissage ; et
une fibre conductrice (20)
**caractérisé en ce que** ladite fibre conductrice (20) entre en contact avec la surface du câble (10) pour pneu et s'étend dans une direction longitudinale du câble (10) pour pneu, dans lequel la fibre conductrice (20) est une fibre présentant un métal plaqué sur sa surface.

2. Tissu de câble pour pneu selon la revendication 1, dans lequel la fibre conductrice (20) est fixée à la surface du câble pour pneu dans un état tel que la fibre conductrice est tissée avec le câble (10) pour pneu par le fil de trame (30).

3. Tissu de câble pour pneu selon la revendication 1, dans lequel le tissu de câble pour pneu inclut 2 à 30 fibres conductrices (20).

4. Tissu de câble pour pneu selon la revendication 1, dans lequel la fibre conductrice (20) est obtenue par le placage de métal sur la surface d'une quelconque fibre sélectionnée dans le groupe consistant en une fibre synthétique, une fibre de cellulose, et un fil mélangé de celles-ci.

5. Tissu de câble pour pneu selon la revendication 4, dans lequel la fibre synthétique est une quelconque sélectionnée dans le groupe consistant en polyester, polyimide, polyuréthane, fibre acrylique, fibre modacrylique, et des fils mélangés de ceux-ci.

6. Tissu de câble pour pneu selon la revendication 4, dans lequel la fibre de cellulose est une quelconque sélectionnée dans le groupe consistant en rayonne, lyocell, Tencel, et des fils mélangés de ceux-ci.

7. Tissu de câble pour pneu selon la revendication 4, dans lequel la fibre conductrice (20) est une quelconque sélectionnée dans le groupe consistant en un fil de filament, une fibre discontinue et un filé.

8. Tissu de câble pour pneu selon la revendication 7, dans lequel le filé présente 10 numéros de fil ('S) à 100 numéros de fil ('S), et le fil de filament présente 10 deniers à 500 deniers.

9. Procédé de fabrication d'un tissu de câble pour pneu, le procédé comprenant une étape consistant à fabriquer une fibre conductrice (20) en plaquant du métal sur la surface d'une fibre et une étape consistant à apporter une pluralité de câbles (10) pour pneu en tant que fil de chaîne et à tisser un fil de trame (30) avec les câbles (10) pour pneu afin de mener une opération de tissage, **caractérisé en ce que** l'étape de réalisation de l'opération de tissage comprend le fait d'amener la fibre conductrice (20) à entrer en contact avec des surfaces des câbles (10) pour pneu et à s'étendre dans une direction longitudinale des câbles (10) pour pneu, avec les câbles (10) pour pneu pour apporter la fibre conductrice (20) en tant que fil de chaîne, et la fibre conductrice (20) est une fibre présentant du métal plaqué sur sa surface.

10. Procédé selon la revendication 9, dans lequel l'étape de fabrication de la fibre conductrice (20) est effectuée par le dépôt autocatalytique de sulfate de cuivre sur la surface de la fibre.

11. Procédé selon la revendication 9, dans lequel l'étape de réalisation de l'opération de tissage comprend le fait d'ourdir ou d'étirer la fibre conductrice (20) avec le câble (10) pour pneu.

12. Procédé selon la revendication 9, dans lequel l'étape de réalisation de l'opération de tissage comprend le fait d'apporter la fibre conductrice (20) dans les même lisse, peigne et lamelle que le câble (10) pour pneu lors du processus d'étirage.

13. Feuille incluant le tissu de câble pour pneu selon l'une quelconque des revendications 1 à 8 et un caoutchouc de garniture qui recouvre le tissu de câble pour pneu.

14. Feuille selon la revendication 13, dans laquelle le caoutchouc de garniture comprend 100 parts en poids de caoutchouc brut incluant 20 à 50 parts en poids de caoutchouc naturel et 50 à 80 parts en poids de caoutchouc de butadiène-styrène polymérisé par émulsion, et 20 à 60 parts en poids de noir de carbone présentant une valeur de superficie d'épaisseur statistique (STSA) de 29 à 39 m²/g, une valeur d'indice d'absorption d'huile d'échantillon comprimé (COAN) de 69 à 79 cc/100 g, une valeur d'indice d'absorption d'huile d'échantillon (OAN) de 85 à 95 cc/100 g, et une valeur de quantité d'adsorption d'iode de 31 à 41 mg/g.

15. Feuille selon la revendication 13, dans laquelle le caoutchouc de garniture comprend 100 parts en poids de caoutchouc brut incluant 10 à 40 parts en poids de caoutchouc de butadiène-styrène synthétique et 60 à 90 parts en poids de caoutchouc naturel, 10 à 40 parts en poids d'un premier noir de carbone présentant une valeur STSA de 29 à 39 m²/g, une valeur COAN de 69 à 79 cc/100 g, une valeur OAN de 85 à 95 cc/100 g, et une valeur de quantité d'adsorption d'iode de 31 à 41 mg/g, et 20 à 50 parts en poids d'un second noir de carbone présentant une valeur STSA de 70 à 80 m²/g, une valeur COAN de 83 à 93 cc/100 g, une valeur OAN de 96 à 108 cc/100 g, et une valeur de quantité d'adsorption d'iode de 76 à 88 mg/g.

16. Feuille selon la revendication 13, dans laquelle la feuille est une carcasse.

17. Pneu incluant la feuille selon la revendication 13.

18. Pneu selon la revendication 17, dans lequel une partie d'appui sur le sol et une partie jante du pneu présentent une valeur de résistance de 0,1 à 100 MΩ à une tension de 1000 V.
